# EUROPÄISCHE PATENTSCHRIFT

(11) **EP 2 732 170 B1**
(45) Veröffentlichungstag und Bekanntmachung des Hinweises auf die Patenterteilung: **06.01.2016**
(21) Anmeldenummer: 12733604.8
(22) Anmeldetag: 07.07.2012
(51) Int. Cl.: F16B 5/00, B60J 5/04, F16B 39/284

(54) **BAUGRUPPE MIT MINDESTENS ZWEI ANEINANDER FIXIERTEN BAUTEILEN**
ASSEMBLY WITH AT LEAST TWO CONNECTED PARTS
ASSEMBLAGE COMPORTANT AU MOINS DEUX ÉLÉMENTS DE CONSTRUCTION RELIÉES

(30) Priorität: 13.07.2011 DE 202011103327 U
(43) Veröffentlichungstag der Anmeldung: 21.05.2014
(73) Patentinhaber: Brose Fahrzeugteile GmbH & Co. KG, Hallstadt, 96103 Hallstadt (DE)
(72) Erfinder: KARL, Joachim, 97522 Sand (DE); HAMPEL, Klaus, 96450 Coburg (DE); GERSTLAUER, Ralph, 97453 Schonungen (DE)
(74) Vertreter: Maikowski & Ninnemann
(86) Internationale Anmeldenummer: PCT/EP2012/002871
(87) Internationale Veröffentlichungsnummer: WO 2013/007368

(56) Entgegenhaltungen:
- EP-A1- 0 538 549
- EP-A1- 1 380 757
- DE-A1- 4 140 574
- DE-A1- 19 607 687

## Beschreibung

Die Erfindung betrifft eine Baugruppe für ein Kraftfahrzeug mit wenigstens einem ersten und einem zweiten Bauteil gemäß dem Oberbegriff des Anspruches 1 sowie ein Verfahren zur Fixierung zweier Bauteile einer Kraftfahrzeugbaugruppe aneinander.

Zur Verbindung von Bauteilen einer Kraftfahrzeugbaugruppe werden regelmäßig Befestigungselemente (zum Beispiel Schrauben oder Niete) verwendet, die die beiden Bauteile miteinander verspannen und dabei wenigstens eines der beiden Bauteile durch eine (Durchgangs-) Öffnung hindurch durchgreifen. Ein solches Befestigungselement greift demgemäß in jeweils eine Öffnung an beiden Bauteilen ein, um diese in einer Relativlage zueinander zu fixieren. Beispielsweise sind eine erste Öffnung an einem ersten Bauteil als Durchgangsöffnung und eine zweite Öffnung an einem zweiten Bauteil als Durchgangs- oder Sacklochöffnung ausgebildet. Eine Öffnung an einem Bauteil kann dabei auch erst durch Vorsehen des Befestigungselements entstehen, wie dies zum Beispiel bei einer selbstschneidenden Schraube als Befestigungselement der Fall ist.

Bei einer derartigen Fixierung zweier Bauteile besteht in der Praxis regelmäßig das Problem, dass über ein Befestigungselement zumindest lokal unerwünschte Verspannungen und Verformungen in wenigstens eines der beiden Bauteile eingebracht werden. Insbesondere bei dünnwandigen Bauteilen, wie sie zur Gewichtseinsparung im Kraftfahrzeugbereich regelmäßig vorgesehen sind, kann es hierdurch zu ungünstigen Belastungen kommen.

Die DE 198 47 268 A1 schlägt zur Lösung dieses Problems beispielsweise vor, dass ein Verbindungsabschnitt mit einer (Durchgangs-) Öffnung an einem von zwei miteinander zu verbindenden Bauteilen gegenüber dem anderen Bauteil zurückgesetzt und verformbar ausgebildet wird. Über die Anbringung eines Befestigungselements wird der Abstand dieses Verbindungsabschnitts gegenüber einem unbelasteten Zustand verringert. Auf diese Weise wird mit dem im unbelasteten / unverspannten Zustand einen Abstand zu dem anderen Bauteil aufweisenden Verbindungsabschnitt eine bessere Verteilung der zum Verspannen der beiden Bauteile miteinander notwendigen Kraft auf die Bauteile gewährleistet. So wird hier gezielt eine Verlagerung an einem dafür vorgesehen Abschnitt gestattet, um ein Ausknöpfen und/oder ein Aufwölben der zu verbindenden Bauteile im Bereich der Öffnungen, in die das Befestigungselement eingreift, zu vermeiden. Diese Lösung wurde zur Verbindung von zwei metallischen Bauteilen entwickelt.

Die in der DE 198 47 268 A1 beschriebene Vorrichtung mit dem zurückgesetzten Verbindungsabschnitt an einem der beiden miteinander zu verbindenden Bauteilen würde dabei auch in gewissen Grenzen den Verspannungen entgegenwirken, die sich dadurch ergeben, dass - bedingt durch Fertigungstoleranzen - die miteinander zur Deckung zu bringenden Öffnungen an den beiden Bauteilen nicht exakt miteinander fluchten, wenn mehrere gleichartige Befestigungsstellen mit je zwei Öffnungen an den beiden Bauteilen vorgesehen sind.

Die DE 198 47 268 A1 lässt aber beispielsweise offen, wie die beiden Bauteile in einer vorgegebenen Relativlage zueinander ausgerichtet werden, bevor ein Befestigungselement die beiden Bauteile miteinander verspannt bzw. aneinander fixiert.

Hiervon ausgehend liegt demgemäß der vorliegenden Erfindung die Aufgabe zugrunde, eine Baugruppe für ein Kraftfahrzeug mit wenigstens zwei aneinander fixierten Bauteilen weiter zu verbessern und ferner ein verbessertes Verfahren zur Fixierung derartiger Bauteile einer Kraftfahrzeugbaugruppe aneinander bereitzustellen. Darüber hinaus sollte die Erfindung auch eine sichere Verbindung zwischen einem metallischen und einem Kunststoffteil bereitstellen, ohne dass bei einem Verbindungsprozess der beiden Bauteile infolge von toleranzbedingten Lageabweichungen der zu verbindenden Bauteile oder infolge von Toleranzen der einwirkenden Verbindungskräfte Beschädigungen am Kunststoffteil befürchtet werden müssen.

Diese Aufgabe wird mit der Baugruppe des Anspruchs 1 gelöst.

Hierbei weist eine Baugruppe für ein Kraftfahrzeug gemäß dem Anspruch 1 ein erstes und ein zweites Bauteil auf, die über wenigstens ein Befestigungselement, wie zum Beispiel eine Schraube oder ein Niet, aneinander fixiert sind. Jedes der Bauteile weist eine Öffnung auf, in die das Befestigungselement zur Fixierung der beiden Bauteile eingreift. Eine erste Öffnung an dem ersten Bauteil ist von einem flexibel verlagerbaren Randabschnitt des ersten Bauteils berandet, der von dem Befestigungselement gegenüber einem unbelasteten Ursprungszustand, in dem das erste Bauteil nicht an dem zweiten Bauteil fixiert ist, verlagert. Hierbei ist die erste Öffnung mit dem sie berandenden Randabschnitt innerhalb einer gegenüber dem zweiten Bauteil zurückgesetzten Aufnahme des ersten Bauteils ausgebildet.

Erfindungsgemäß ist nun vorgesehen, dass sich in die Aufnahme des ersten Bauteils hinein ein von dem zweiten Bauteil in Richtung des ersten Bauteils vorstehender Abschnitt erstreckt, der die zweite Öffnung des zweiten Bauteils berandet.

Demgemäß ragt der vorstehende Abschnitt (Vorsprung) des zweiten Bauteils in die Aufnahme des ersten Bauteils hinein, so dass ein Teil des zweiten Bauteils in der Aufnahme des ersten Bauteils aufgenommen ist. Hierüber liegen folglich die beiden Bauteile (durch einen Formschluss) in einer Relativlage zueinander vor, wobei in Abhängigkeit von den Abmessungen und der jeweiligen Form der Aufnahme und des vorstehenden Abschnitts zum Beispiel noch eine Verstellbarkeit des einen Bauteils relativ zu dem anderen Bauteil gegeben sein kann. So kann der vorstehende Abschnitt innerhalb der Aufnahme derart untergebracht sein, dass das eine Bauteil noch zu dem anderen Bauteil (zumindest geringfügig) verdrehbar oder verschiebbar ist, bevor das Befestigungselement bestimmungsgemäß sowohl in die Öffnung des vorstehenden Abschnitts als auch in die Öffnung der Aufnahme eingreift.

Mit einer erfindungsgemäßen Ausbildung einer Baugruppe ist somit nicht nur sichergestellt, dass durch die Verlagerbarkeit des eine Öffnung berandenden Randabschnitts unerwünschte Belastungen reduziert und Fertigungstoleranzen ausgeglichen werden können, sondern dass auch mit den Abschnitten, die die beiden über ein Befestigungselement miteinander zu verbindenden Öffnungen aufweisen, bereits vor dem Anbringen oder Festziehen des Befestigungselements eine Relativlage der beiden Bauteile zueinander vorgegeben werden kann.

In einer bevorzugten Ausführungsvariante ist der Randabschnitt des ersten Bauteils, der die erste Öffnung berandet, nicht nur flexibel (plastisch) verlagerbar ausgebildet, sondern elastisch verlagerbar. Der die erste Öffnung berandende und vorzugsweise (in einer Draufsicht auf die Öffnung) vollständig umgebende Randabschnitt ist demgemäß ausgehend von einem unbelasteten Ursprungszustand entgegen einer Rückstellkraft durch das zugeordnete Befestigungselement verlagerbar und hat die Tendenz, in den unbelasteten Ursprungszustand zurückzukehren. Durch die gezielte Einbringung einer Elastizität in die Aufnahme im Bereich der ersten Öffnung wird insbesondere die Anlage des Randabschnitts an dem in die Aufnahme eingeführten vorstehenden Abschnitt (Vorsprung) erleichtert.

So kann beispielsweise vorgesehen sein, dass der flexible (elastische) Randabschnitt, insbesondere flächig, an dem Vorsprung des zweiten Bauteils anliegt und über das Befestigungselement gegen den Vorsprung gedrückt ist. Auf diese Weise wird der Vorsprung innerhalb der Aufnahme durch Wechselwirkung mit dem flexibel (elastisch) verlagerbaren Randabschnitt innerhalb de Aufnahme des ersten Bauteils arretiert. Ein bereits über den in die Aufnahme hinein ragenden Vorsprung bereitgestellter Formschluss zwischen den beiden Bauteilen wird somit durch Anbringen (und Festziehen) des Befestigungselements in einem solchen Ausführungsbeispiel durch einen Kraftschluss arretiert, der sich durch das Drücken bzw. Pressen des verlagerbaren Randabschnitts gegen den Vorsprung ergibt.

Eine Aufnahme an dem ersten Bauteil kann beispielsweise kegel-, mulden- oder napfförmig ausgebildet sein, wobei die erste Öffnung an der tiefsten Stelle dieser Mulde zentral vorgesehen ist. Ein Vorsprung an dem zweiten Bauteil kann beispielsweise mit einer mit der Aufnahme korrespondierenden Kontur ausgebildet sein. Insbesondere kann der Vorsprung durch eine kegel-, mulden- oder napfförmige Wölbung an einer Wandung des zweiten Bauteils ausgebildet sein.

In einer Ausführungsform weist die Aufnahme eine Wandung auf, die zumindest teilweise schräg in Richtung auf das zweite Bauteil verläuft. Hierüber wird insbesondere eine leichtere Einführung des vorstehenden Abschnitts bzw. Vorsprungs des zweiten Bauteils in die Aufnahme erleichtert.

In einer darauf basierenden Weiterbildung ist die Aufnahme kegel(stumpf)förmig, insbesondere trichterförmig ausgebildet. Hierüber wird nicht nur die Einführung des Vorsprungs in die Aufnahme erleichtert, sondern - bei hierzu korrespondierender, kegel(stumpf)förmiger Ausbildung des Vorsprungs - auch gleichzeitig eine einfache Zentrierung der beiden Öffnungen miteinander erreicht. So können die beiden Kegelformen des Vorsprungs einerseits und der Aufnahme andererseits so aufeinander abgestimmt sein, dass durch das in beide Öffnungen eingreifende Befestigungselement die beiden Kegel und damit die Mittelachsen der beiden Öffnungen zueinander zentriert werden. Ferner kann der flexibel (elastisch) verlagerbare Randabschnitt der Aufnahme zumindest einen Teil der Kegelform definieren, so dass durch Anbringen (und Anziehen) des Befestigungselements die Kegelform der Aufnahme in (reibschlüssigen) Kontakt mit der Kegelform des Vorsprungs gebracht werden kann bzw. gebracht ist. Auf diese Weise ist auch bei (innerhalb vorgegebener Toleranzen liegender) Maßabweichungen eine exakte Passung von Vorsprung (vorstehendem Abschnitt) und zugeordneter Aufnahme gegeben, wenn das Befestigungselement bestimmungsgemäß angebracht und festgezogen ist.

Alternativ oder ergänzend kann in einem Ausführungsbeispiel vorgesehen sein, dass das zweite Bauteil an einem außerhalb der zurückgesetzten Aufnahme dafür vorgesehenen Auflagebereich des ersten Bauteils an dem ersten Bauteil an- bzw. aufliegt. Bei diesem Auflagebereich kann es sich beispielsweise um einen Rand der Aufnahme handeln und / oder eine in Richtung auf das zweite Bauteil erhaben hervorstehende (ebene) Flächen des ersten Bauteils, auf dem bzw. der das zweite Bauteil über den Vorsprung oder hierzu beabstandeten Abschnitten an dem ersten Bauteil an- bzw. aufliegt.

In einer Ausführungsform einer erfindungsgemäßen Baugruppe ist der Randabschnitt des ersten Bauteils über einen Schwächungsbereich derart mit einem Rand der Aufnahme verbunden, dass der Randabschnitt gegenüber dem Rand der Aufnahme flexibel oder elastisch verlagerbar ist. Ein die erste Öffnung des ersten Bauteils teilweise oder vollständig umrandender Randabschnitt ist hier vorzugsweise über den Schwächungsbereich innerhalb der Aufnahme derart angelenkt, dass er über das Befestigungselement flexibel oder elastisch verlagert und zur (reibschlüssigen) Anlage an dem bereits in die Aufnahme ragenden vorstehenden Abschnitt gebracht werden kann. Hierfür kann der flexible oder elastische Abschnitt z. B. gezielt in Richtung auf den vorstehenden Abschnitt des zweiten Bauteils verlagerbar sein, so dass der Randabschnitt reibschlüssig an dem vorstehenden Abschnitt (flächig) anliegt, wenn das Befestigungselement bestimmungsgemäß an ihm angreift.

Der Schwächungsbereich wird vorzugsweise durch eine Reduzierung von Material in dem an den Randabschnitt angrenzenden Bereich innerhalb der Aufnahme realisiert. Hierbei weist der Schwächungsbereich dementsprechend eine geringere Materialdicke auf als der daran angrenzende Randabschnitt und der daran angrenzende Rand der Aufnahme.

In einer Weiterbildung erstreckt sich der Schwächungsbereich zumindest teilweise entlang einer zu der ersten Öffnung im Wesentlichen konzentrisch verlaufenden Bahn. Eine durch den Schwächungsbereich definierte Achse, um die der Randabschnitt verlagerbar ist, verläuft demgemäß (zumindest abschnittsweise) parallel zu einem Rand der ersten Öffnung des ersten Bauteils. Der Randabschnitt kann hierüber insbesondere mit einer Richtungskomponente parallel zu einer Längserstreckungsrichtung oder Längsachse des in die Öffnung eingreifenden oder diese durchgreifenden Befestigungselements verlagert sein bzw. werden.

Bevorzugt ist eine Öffnung als Bohrung mit kreisförmiger Grundfläche ausgebildet, so dass sich der Schwächungsbereich entlang einer Kreisbahn konzentrisch zu dieser Öffnung erstreckt.

Grundsätzlich können mehrere voneinander räumlich getrennte Schwächungsbereiche innerhalb einer Aufnahme vorgesehen sein, die einem flexiblen oder elastischen Randabschnitt zugeordnet sind oder die jeweils einem von mehreren flexiblen oder elastischen Randabschnitten zugeordnet sind.

So kann beispielsweise ein einzelner, durchgängiger flexibel oder elastisch angelenkter Randabschnitt innerhalb der Aufnahme vorgesehen sein, der über mehrere segmentartig voneinander beabstandete und um die Öffnung herum angeordnete Schwächungsbereiche relativ zu einem Rand der Aufnahme flexibel oder elastisch verlagerbar ist. Alternativ können innerhalb einer Aufnahme mehrere einen Rand der Öffnung bildende und nicht miteinander (starr) verbundene Segmente als einzelne Randabschnitte vorgesehen sein, die jeweils über einen eigenen, zugeordneten Schwächungsbereich an dem Rand der Aufnahme flexibel oder elastisch angelenkt sind. Beispielsweise kann die Aufnahme beispielsweise kegel(stumpf)förmig mit einer im Wesentlichen kreisförmigen Grundfläche ausgebildet sein, wobei am tiefsten Punkt der Aufnahme die Öffnung für das Befestigungselement vorgesehen ist. Die Innenwandung dieser kegelförmigen Aufnahme wird dann von einzelnen voneinander getrennten, Randabschnitten gebildet, die sich in einer Draufsicht im Wesentlichen als Teil von Kreissektoren bzw. Kreisausschnitten darstellenden und die jeweils über einen zugeordneten Schwächungsbereich von mehreren Schwächungsbereichen (oder über einen gemeinsamen, umlaufenden Schwächungsbereich) an den Rand der Aufnahme flexibel oder elastisch verlagerbar angebunden sind.

In einer Ausführungsvariante erstreckt sich ein durchgängiger Schwächungsbereich (für einen oder mehrere verlagerbare Randabschnitte) ringförmig um die erste Öffnung herum.

In einer alternativen Ausführungsvariante wiederum sind mehrere Schwächungsbereiche vorgesehen, die sich jeweils kreissegmentartig um die erste Öffnung herum erstrecken.

In einem Ausführungsbeispiel einer erfindungsgemäßen Baugruppe weist eines der beiden Bauteile mindestens eine weitere, gegenüber dem anderen Bauteil zurückgesetzte Aufnahme mit wenigstens einem flexibel verlagerbaren Randabschnitt auf, in die sich hinein ein weiterer vorstehender Abschnitt des anderen Bauteils erstreckt. Dieses durch eine zweite Aufnahme und einen zweiten Vorsprung gebildete Paar muss dabei nicht zwingend zwei Öffnungen für ein Befestigungselement aufweisen. Dieses Paar kann somit beispielsweise lediglich zur Vorgabe einer bestimmungsgemäßen Relativlage der beiden Bauteile zueinander vorgesehen sein, wobei der flexible / elastische Randabschnitt für einen Toleranzausgleich sorgt, so dass die beiden Bauteile gegebenenfalls auch im Bereich dieser (weiteren, zweiten) Aufnahme aneinander anliegen.

Alternativ oder ergänzend kann aber selbstverständlich auch ein weiteres (funktionell identisches) Paar aus Aufnahme und Vorsprung für ein (weiteres) Befestigungselement an den beiden Bauteilen vorgesehen sein.

Die erfindungsgemäße Ausbildung einer Baugruppe hat sich insbesondere bei Bauteilen als vorteilhaft erwiesen, bei denen eines aus Metall und das andere aus einem Kunststoffmaterial hergestellt sind. Vorzugsweise ist hierbei dasjenige (erste) Bauteil, das mindestens eine Aufnahme mit einem flexibel oder elastisch gelagerten Randabschnitt aufweist, aus einem Kunststoffmaterial hergestellt.

Bei den beiden Bauteilen kann es sich insbesondere um Komponenten einer Fensterheberbaugruppe für ein Kraftfahrzeug handeln. So kann ein erstes Bauteil mit einer oder mehreren Aufnahmen beispielsweise ein Funktionskomponenten eines Kraftfahrzeugfensterhebers tragendes Trägerbauteil (aus einem Kunststoffmaterial) und das andere Bauteil eine Führungsschiene (aus Metall) zur Vorgabe einer Verstellbahn für die mit dem Fensterheber zu verstellende Fensterscheibe sein. Die erfindungsgemäße Ausführung ist jedoch auch bei anderen Bauteilen eine Kraftfahrzeugbaugruppe umsetzbar, z. B. auch bei einem Gehäusebauteil und einem Trägerteil, an dem das Gehäusebauteil zu fixieren ist.

In einer Ausführungsform ist das Befestigungselement vorzugsweise ein Niet, über den demgemäß eine (form- und reibschlüssige) Nietverbindung zur Fixierung der beiden Bauteile aneinander realisiert wird. Die beiden Öffnungen für den Niet sind folglich an den beiden Bauteilen jeweils als Durchgangsöffnungen ausgeführt, die der Niet durchgreifen kann.

Wie bereits eingangs kurz erläutert, dient der flexibel (oder sogar elastisch) verlagerbare Randabschnitt einer Aufnahme vorzugsweise dem Ausgleich von Fertigungstoleranzen, so dass die beiden Bauteile im Bereich des flexiblen Randabschnitts (zumindest noch geringfügig) zueinander ausgerichtet werden können, wenn sie bereits durch den Eingriff des Vorsprungs in die zugehörige Aufnahme in einer vorgegebenen Relativlage zueinander vorliegen. Der in die Aufnahme ragende vorstehende Abschnitt (Vorsprung) ist dann (erst) durch den verlagerten und gegen den vorstehenden Abschnitt drückenden Randabschnitt innerhalb der Aufnahme bestimmungsgemäß arretiert. In einer darauf basierenden Ausführungsvariante ist demgemäß der verlagerbare Randabschnitt so ausgebildet, dass sich die beiden Bauteile im Bereich des flexiblen Randabschnitts während des Befestigungsprozesses selbsttätig zueinander ausrichten und eine bestimmungsgemäße tragfähige Verbindung bilden können, wobei der vorstehende Abschnitt durch den verlagerten und gegen den vorstehenden Abschnitt gedrückten Randabschnitt in der Aufnahme arretiert ist.

Gemäß einem weiteren Aspekt der vorliegenden Erfindung ist damit auch ein verbessertes Verfahren zur Fixierung zweier Bauteile einer Kraftfahrzeugbaugruppe aneinander bereitgestellt.

Bei einem derartigen Verfahren zur Fixierung eines ersten und eines zweiten Bauteils einer Kraftfahrzeugbaugruppe aneinander werden die beiden Bauteile über wenigstens ein erstes und ein zweites Befestigungselement aneinander fixiert, indem ein Befestigungselement jeweils in ein Paar von zwei Öffnungen eingreift, von denen je eine Öffnung an dem ersten Bauteil und eine Öffnung an dem zweiten Bauteil bereitgestellt sind. Dabei ist je eine Öffnung eines Paares von Öffnungen für ein Befestigungselement in einer Aufnahme an einem der Bauteile bereitgestellt, die gegenüber dem anderen Bauteil zurückgesetzt ausgebildet ist. Ferner ist ein diese Öffnung berandender Randabschnitt der Aufnahme derart flexibel (oder elastisch) verlagerbar ausgebildet, dass er von einem in die zugehörige Öffnung eingreifenden Befestigungselement verlagert werden kann. Die jeweils andere Öffnung eines Paares von Öffnungen für ein Befestigungselement ist weiterhin an einem in Richtung des anderen Bauteils vorstehenden Abschnitt eines Bauteils bereitgestellt. Dieser vorstehende Abschnitt (Vorsprung) kann sich (vollständig) in eine zugeordnete Aufnahme des anderen Bauteils hinein erstrecken.

Im Rahmen des Verfahrens werden die beiden Bauteile weiterhin derart in einer Relativlage zueinander angeordnet, dass sich jeweils ein vorstehender Abschnitt mit der einen Öffnung in eine die andere Öffnung aufweisende Aufnahme hinein erstreckt. Zur Fixierung der beiden Bauteile aneinander wird dann mindestens einer der vorstehenden Abschnitte in einer zugeordneten Aufnahme arretiert, indem der flexible (elastische) Randabschnitt dieser Aufnahme (flächig) an dem vorstehenden Abschnitt anliegt und über das zugehörige Befestigungselement der Randabschnitt und der vorstehende Abschnitt aneinander gedrückt werden.

Über das Drücken des verlagerbaren Randabschnitts gegen den in die Aufnahme hinein vorstehenden Abschnitt wird folglich ein bereits bestehender Formschluss zwischen den beiden Bauteilen nachträglich durch einen Reib- oder Kraftschluss arretiert. Hierzu wirkt das Befestigungselement, z. B. ein Niet, unmittelbar auf den verlagerbaren Randabschnitt ein oder das Befestigungselement übt eine Kraft auf das Bauteil mit dem vorstehenden Abschnitt (Vorsprung), die den Vorsprung gegen den sich hierbei verlagernden Randabschnitt drückt.

Hierbei wird es erneut bevorzugt, wenn die beiden Aufnahmen im Wesentlichen kegel(stumpf)förmig ausgebildet sein. Der jeweils zugehörige vorstehende Abschnitt ist dann mit einer korrespondierenden, gleichfalls im Wesentlichen kegelförmigen Form ausgestattet, so dass über zwei Paare von im Wesentlichen kegelförmigen Aufnahmen und Vorsprüngen die beiden zu fixierenden Bauteile bereits in einer vorgegebenen Relativlage zueinander vorliegen, bevor über die wenigstens zwei Befestigungselemente eine (endgültige) Fixierung erzielt wird. Die Kegelform von Aufnahme und Vorsprung erlaubt zudem eine einfache Zentrierung der beiden Kegelachsen und Mittelachsen der beiden Öffnungen bei Anbringung des zugehörigen (ersten) Befestigungselements. Es kann somit sichergestellt werden, dass die beiden Bauteile zumindest im Bereich derjenigen Aufnahme, an der zuerst ein Befestigungselement angebracht (und festgezogen) wird, bestimmungsgemäß zueinander ausgerichtet aneinander fixiert werden.

An der wenigstens einen weiteren Aufnahme mit einem flexiblen (elastischen) Randabschnitt ist dann ferner gewährleistet, dass über das nachträglich angebrachte (zweite) Befestigungselement keine oder zumindest keine hohen unerwünschten Verspannungen in die beiden miteinander zu verbindenden Bauteile im Bereich dieser (zweiten) Aufnahme eingebracht werden.

Vorteilhafte Ausgestaltungen der vorliegenden Erfindung sind ferner auch durch die Unteransprüche angegeben.

Zusätzliche Merkmale und Vorteile werden weiterhin bei der nachfolgenden Beschreibung von Ausführungsbeispielen anhand der Figuren deutlich werden.

Es zeigen:
- Fig. 1A-1C: verschiedene Ansichten eines erfindungsgemäßen Ausführungsbeispiels in Form einer Fensterheberbaugruppe mit einem Träger und einer Führungsschiene, die an dem Träger zu fixieren ist;
- Fig. 2A-2B: zwei Schnittansichten von zwei zueinander entlang der Längserstreckungsrichtung der Führungsschiene der Figuren 1A-1C beabstandeten Befestigungsabschnitten, an denen die Führungsschiene an dem Träger fixiert ist;
- Fig.3A: Explosionsdarstellung eines erfindungsgemäßen Ausführungsbeispiels einer Baugruppe für ein Kraftfahrzeug mit einem Trägerteil und einem Gehäuseteil, die aneinander zu fixieren sind;
- Fig. 3B: die beiden Bauteile der Figur 3A in einander fixiertem Zustand;
- Fig. 3C: das Trägerteil der Figuren 3A und 3B in Einzelansicht;
- Fig. 4A - 4C: Schnittansichten der Baugruppe gemäß dem in der Figur 3B ersichtlichen Zustand;
- Fig. 5: ein alternativ ausgebildetes Trägerteil in perspektivischer Ansicht;
- Fig. 6: eine vergrößerte Detaildarstellung eines im Bereich einer Aufnahme alternativ ausgestalteten Trägerteils entsprechend den Figuren 3A - 3C und 4A - 4C.

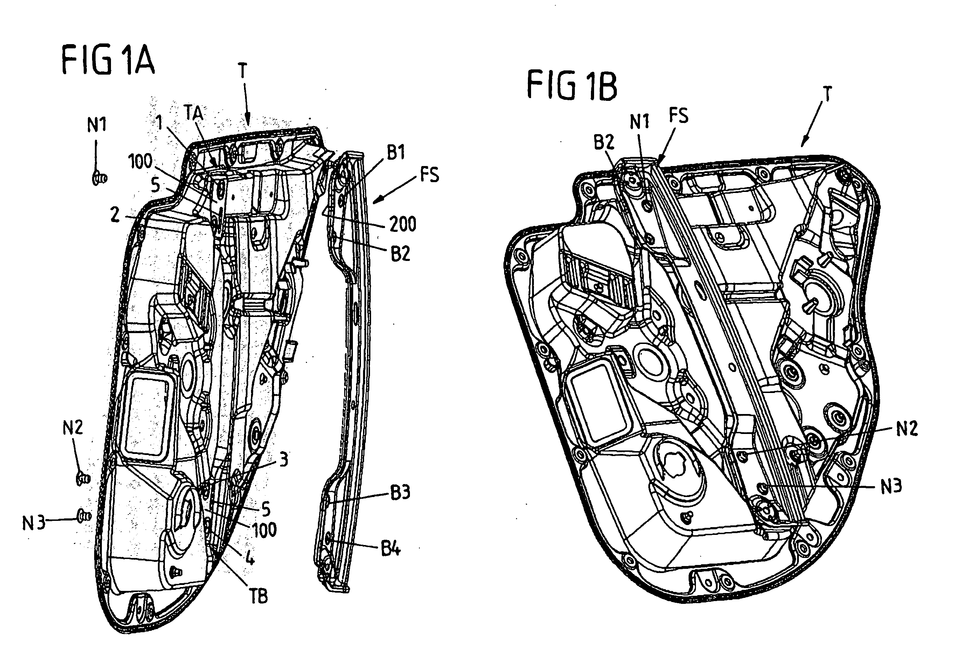

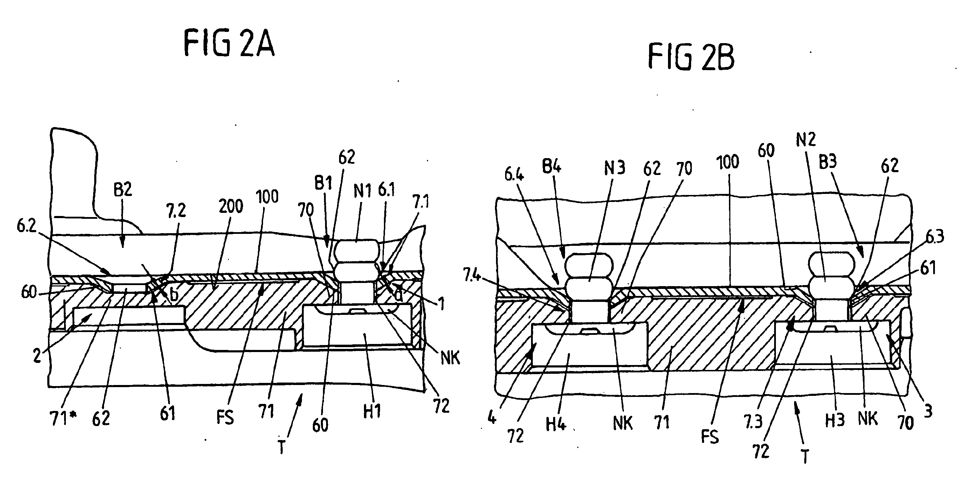

Die Figuren 1A-1C und 2A-2B zeigen ein erstes Ausführungsbeispiel für eine erfindungsgemäße Baugruppe für ein Kraftfahrzeug mit einem ersten Bauteil in Form eines (Aggregate-) Trägers T und einem zweiten Bauteil in Form einer Führungsschiene FS als Komponente eines nicht weiter dargestellten Kraftfahrzeugfensterhebers. Die Führungsschiene FS ist dabei im Bereich zweier Paare von Befestigungsstellen B1, B2 und B3, B4, die entlang einer Längserstreckungsrichtung der Führungsschiene FS zueinander räumlich beabstandet sind, und somit an insgesamt vier Befestigungsstellen an dem Träger T zu fixieren. Ein Paar von Befestigungsstellen B1, B2 liegt demgemäß im Bereich eines (oberen) Endes der Führungsschiene FS, während das andere Paar von Befestigungsstellen B3, B4 im Bereich des gegenüberliegenden (unteren) Endes der Führungsschiene FS angeordnet ist.

An den Befestigungsstellen B1 bis B4 ist jeweils ein vorstehender Abschnitt bzw. Vorsprung 6.1, 6.2, 6.3 oder 6.4 vorgesehen, der jeweils von einer (Unter-) Seite der Führungsschiene FS in Richtung auf den Träger T an der Führungsschiene FS hervorsteht. Ein Vorsprung 6.1 - 6.4 weist dabei jeweils eine im Wesentlichen kegelförmige bzw. kegelstumpfförmige oder trichterförmige Außenform auf und ist zentral mit einer (zweiten) Durchgangsöffnung 62 versehen.

An den Befestigungsstellen B1, B3 und B4 dient diese (zweite) Durchgangsöffnung 62 der Führungsschiene FS jeweils dem Durchgriff eines Befestigungselements, das hier jeweils in Form eines Niets N1, N2, N3 ausgebildet ist. An der einen Befestigungsstelle B2 ist demgegenüber keine Anbringung eines Befestigungselements vorgesehen.

An dem Träger T sind an zwei zueinander beabstandeten Befestigungsabschnitten TA und TB mit im Wesentlicher rechteckiger Grundfläche jeweils mit den Befestigungsstellen B1 bis B4 der Führungsschiene FS korrespondierende Befestigungsstellen 1 bis 4 vorgesehen. An drei der insgesamt vier Befestigungsstellen 1 bis 4 sind gleichermaßen (erste) Durchgangsöffnungen als Befestigungsöffnungen 72 ausgebildet. An diesen Befestigungsstellen 1, 2 und 4 ist dementsprechend vorgesehen, dass ein zugeordneter Niet N1, N2 oder N3 sowohl die (erste) Befestigungsöffnung 72 des Trägers T als auch die damit korrespondierende (zweite) Öffnung 62 der Führungsschiene FS durchgreift und die beiden Bauteile T und FS hier miteinander verspannt, um sie aneinander zu fixieren.

Ein Paar von Befestigungsstellen 1, 2 und 3, 4 an einem Befestigungsabschnitt TA oder TB ist dabei jeweils durch eine im Wesentlichen ebenfalls kegelförmige bzw. kegelstumpfförmige Aufnahme 7.1 - 7.4 gebildet, die gegenüber einer ebenen (Ober-) Seite 100 des jeweiligen Befestigungsabschnitts TA bzw. TB, an dem die Führungsschiene FS mit ihrer Unterseite 200 zur Anlage kommt, zurückgesetzt ausgebildet. Die schrägen Innenwandungen einer Aufnahme 7.1 - 7.4 verlaufen somit - von einem Mittelpunkt der Aufnahme 7.1 - 7.4 aus gesehen - schräg in Richtung auf die Führungsschiene FS, wenn diese an dem Träger T fixiert ist. Eine Aufnahme 7.1 - 7.4 ist demgemäß auch gegenüber der an dem Träger T zu fixierenden Führungsschiene FS zurückgesetzt ausgebildet.

Die einzelnen Niete N1, N2 und N3 sind von einer der Führungsschiene FS abgewandten Rückseite des flächigen Trägers T her durch ein Paar miteinander zur Deckung gebrachten, vorgefertigten (Durchgangs-) Öffnungen 62, 72 im Bereich der Befestigungsstellen 1, B1; 3, B3 und 4, B4 geführt, so dass ein Niet N1, N2, N3 jeweils beide Öffnungen 62, 72 durchgreift. Ein Nietkopf NK eines Niets N1, N2 oder N3 liegt dabei auf der Rückseite des Trägers T in einer dafür vorgesehenen Aussparung H1, H3, H4 an dem Träger T an und drückt im angezogenen Zustand die Führungsschiene FS im Bereich der zugeordneten Befestigungsstelle B1, B3 oder B4 an das Trägerteil T, so dass die Führungsschiene FS an dem Trägerteil T über die drei Niete N1 bis N3 unbeweglich an dem Träger T fixiert ist.

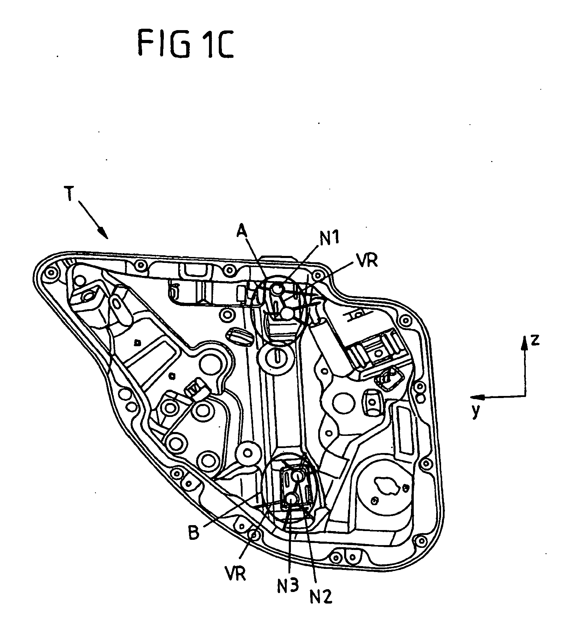

Zur Verstärkung der Befestigungsstellen 1, 2, 3 und 4 an dem Träger T sind auf der Rückseite des Trägers T Verstärkungsrippen vorgesehen. Diese Verstärkungsrippen verlaufen jeweils von einem Mittelpunkt einer Aufnahme 7.1 - 7.4 radial nach außen und dienen damit einer besseren Krafteinleitung der von der Führungsschiene FS im Bereich der Befestigungsstellen 1 - 4 auf den Träger T wirkenden Kräfte. Eine Mehrzahl von Verstärkungsrippen VR verläuft dabei jeweils sternförmig von einem Mittelpunkt einer Aufnahme 7.1 - 7.4 radial nach außen, wie in den mit "A" und "B" hervorgehobenen Bereichen der Figur 1C ersichtlich ist.

Im Bereich einer Befestigungsstelle 2 mit einer Aufnahme 7.2 ist am Fuß der Aufnahme 7.2 - das heißt, an dem tiefsten Punkt der Aufnahme 7.2 - keine Durchgangsöffnung zu der Rückseite des Trägers T hin vorgesehen. Vielmehr wird hier der Fuß bzw. Boden der Aufnahme 7.2 durch eine geschlossene Basis 71* gebildet, die dem in der Aufnahme 7.2 ruhenden Vorsprung 6.2 der Führungsschiene FS in geringem Abstand gegenüberliegt.

An dieser Aufnahme 7.2 ist kein Eingriff eines Befestigungselements vorgesehen, um den Vorsprung 6.2 innerhalb der Aufnahme 7.2 (reibschlüssig) zu arretieren. So greift der einen Einführbereich 61 definierende Vorsprung 6.2 lediglich formschlüssig in die Aufnahme 7.2 ein.

Die an den Vorsprung 6.2 mit dem Einführbereich 61 angrenzenden, schräg verlaufenden Wandungen des Vorsprungs 6.2, die die Kegelform bzw. die Kegelstumpfform definieren, weisen ferner einen flächigen Anlagebereich 60 auf. Dieser Anlagebereich 60 liegt einer Innenwandung der Aufnahme 7.2 gegenüber, liegt (hier) jedoch nicht flächig an dieser Innenwandung an. Der Vorsprung 6.2 kann hier aber über die Innenwandung der Aufnahme 7.2 abgestützt werden, insbesondere wenn die Führungsschiene FS im Bereich der Aufnahme 7.2 in Richtung auf den Träger T gedrückt wird.

Diejenigen Aufnahmen 7.1, 7.3 und 7.4 an den Befestigungsstellen 1, 3 und 4 des Trägers T, an denen eine durchgehende (die beiden Seiten des Trägers T miteinander verbindende) Befestigungsöffnung 72 vorgesehen ist, sind weitestgehend identisch zu der einen Aufnahme 7.2 ausgebildet, an deren Basis 71* keine solche durchgehende Befestigungsöffnung 72 vorgesehen ist. Im Gegensatz zu der zuvor beschriebenen Aufnahme 7.2 weisen diese Aufnahmen 7.1, 7.3 und 7.4 aber jeweils eine Befestigungsöffnung 72 für ein Befestigungselement N1, N2 oder N3 sowie einen elastischen Randabschnitt 70 auf, der elastisch in Richtung auf den jeweiligen Vorsprung 6.1, 6.3 oder 6.4 der Führungsschiene FS und relativ zu einer der Führungsschiene FS gegenüberliegende Basis 71 des Trägers T verlagerbar ist, wenn der Träger T bzw. die jeweilige Aufnahme 7.1, 7.3 oder 7.4 (stärker), z. B. bei der Fixierung durch ein Befestigungselement N1, N2 oder N3, gegen den Träger T gedrückt wird. Die Basis 71 ist hierbei durch einen eine Aufnahme 7.1, 7.3 und/oder 7.4 umgebenden Abschnitt der Trägers T gebildet.

Der elastische bzw. elastisch verlagerbare Abschnitt 70 ist vergleichsweise dünnwandig ausgebildet und erstreckt sich von einem Rand der jeweiligen Aufnahme 7.1, 7.3 und 7.4 aus schräg in Richtung der Befestigungsöffnung 72. Indem der Randabschnitt 70 durch die jeweilige Befestigungsöffnung 72 einen freies Ende aufweist und vergleichsweise dünnwandig (vorzugsweise aus einem Kunststoffmaterial im Spritzgussverfahren) hergestellt ist, wohnt ihm eine Elastizität inne, so dass er um den Abstand relativ zu der Basis 70 und so relativ zu dem Rand der jeweiligen Aufnahme 7.1, 7.3 und 7.4 elastisch verlagerbar ist. Der elastische Randabschnitt 70 kann somit insbesondere in Richtung auf den jeweiligen Vorsprung zu 6.1, 6.3 oder 6.4 und relativ zu der Basis 70 verlagert werden, wenn ein Vorsprung 6.1, 6.3 oder 6.4 unter Krafteinwirkung stärker in die zugeordnete Aufnahme 7.1, 7.3 bzw. 7.4 hineingedrückt wird oder der Träger T im Bereich der Vorsprünge 6.1, 6.3, 6.4 stärker in Richtung der Führungsschiene FS gedrückt wird.

Dies ist gerade von Vorteil, um bei der Fixierung der Führungsschiene FS an dem Träger T etwaige Fertigungstoleranzen auszugleichen und die beiden Bauteile FS und T zumindest noch geringfügig zueinander ausrichten zu können, wenn die einzelnen Vorsprünge 6.1 bis 6.4 bereits in die jeweils zugeordneten Aufnahmen 7.1 bis 7.4 eingeführt sind und damit der Träger T und die Führungsschiene FS bereits in einer vorgegebenen Relativlage zueinander vor ihrer Fixierung über die Niete N1 bis N3 angeordnet sind.

Da die einzelnen Vorsprünge 6.1 bis 6.4 und die einzelnen Aufnahmen 7.1 - 7.4 jeweils so ausgebildet sind, dass ein Vorsprung 6.1 - 6.4 formschlüssig in der ihm zugeordneten Aufnahme 7.1 - 7.4 aufgenommen ist, bevor ein Befestigungselement in Form eines Niets N1, N2, N3 durch die drei zur Verfügung stehenden Paare von Öffnungen 62, 72 hindurchgetrieben oder endgültig festgezogen wird, ist die Montage einer derartigen Fensterheberbaugruppe erheblich erleichtert. Ferner ist über die kegelige Ausbildung der Aufnahmen 7.1 bis 7.4 und die dazu korrespondierende kegelige Ausbildung der Vorsprünge 6.1 bis 6.4 eine leichtere Zentrierung dieser Abschnitte zueinander möglich.

Die einzelnen elastischen Randabschnitte 70 gestatten somit den Ausgleich von Fertigungstoleranzen, so dass die (metallische) Führungsschiene FS unter weitestgehender Vermeidung von Verspannungen an dem (Kunststoff-) Träger T fixiert werden kann. So werden die einzelnen Befestigungselemente N1, N2, N3 vorzugsweise nacheinander angebracht oder sind zwar alle bereits so angebracht, dass sie in die ihnen jeweils zugeordneten Öffnungen 62, 72 eingreifen (bzw. hier durchgreifen), werden aber dann erst nacheinander fest- bzw. angezogen. Bei einem Anziehen eines Niets N1, N2, N3 wird im Übrigen dessen durch beide Bauteile T, FS hindurchgeführte und von dem Nietkopf NK abstehenden stiftförmige Nietabschnitt so verformt, dass die beiden Bauteil T, FS zwischen dem verformten Nietabschnitt und dem Nietkopf formschlüssig eingefasst sind..

Vorliegend wird zunächst der (erste) Niet N1 der Aufnahme 7.1 angezogen, die benachbart zu der (zweiten) Aufnahme 7.2 liegt, für die kein Befestigungselement vorgesehen ist. Es wird folglich mit derjenigen ersten Aufnahme 7.1 begonnen, die den geringsten Abstand zu derjenigen zweiten Aufnahme 7.2 aufweist, an der keine Befestigungsmöglichkeit für ein Befestigungselement vorsieht.

Durch das An- bzw. Festziehen des Niets N1 wird der Vorsprung 6.1 entgegen der dem elastisch verlagerbaren Randabschnitt 70 innewohnenden Rückstellkraft (weiter) der zugeordneten Aufnahme 7.1 angenähert. Hierbei liegt eine die Kegelform des Vorsprungs 6.1 mitdefinierende äußere Mantelfläche des Vorsprungs 6.1 flächig über den Anlagebereich 60 an dem elastischen Randabschnitt 70 an. Durch die elastische Verlagerbarkeit des Randabschnitts 70 gestattet dieser eine exakte Zentrierung der beiden miteinander zur Deckung gebrachten Öffnungen 62, 72 sowie der beiden durch die Aufnahme 7.1 einerseits und den Vorsprung 6.1 andererseits definierten Kegel bzw. Kegelstümpfe.

Der Randabschnitt 70 wird dabei soweit verlagert, dass er (flächig) dem zugeordneten Vorsprung 6.1 anliegt oder zumindest einen minimalen Abstand a von diesem aufweist. Im Bereich der ersten Aufnahme 7.1, an der bei der Fixierung der Führungsschiene FS an dem Träger T zuerst ein Niet N1 angezogen wird, ist somit sichergestellt, dass die Führungsschiene FS relativ zu dem Träger T exakt ausgerichtet ist und der Vorsprung 6.1 sowohl reibschlüssig an dem elastischen Abschnitt 70 anliegt als auch formschlüssig in der Aufnahme 7.1 sowie über den Fortsatz in der Befestigungsöffnung 72 ruht.

In der zu der ersten Aufnahme 7.1 benachbarten benachbart (an demselben Befestigungsabschnitt TA) liegenden Aufnahme 7.2, an der kein Befestigungselement vorgesehen wird, ist der Vorsprung 6.2 in jedem Fall aber formschlüssig innerhalb der zugeordneten Aufnahme 7.2 aufgenommen, wobei durch den elastischen Abschnitt 70 auch hier zumindest sichergestellt ist, dass der Vorsprung über seinen Anlagebereich 60 (flächig) an dem elastischen Randabschnitt 70 anliegt.

An den beiden weiteren Aufnahmen 7.3 und 7.4, an denen nacheinander die (zweiten und dritten) Niete N2 und N3 festgezogen werden, ist zwar aufgrund der Fertigungstoleranzen unter Umständen keine exakte Zentrierung der beiden Kegel des jeweiligen Vorsprungs 6.3 oder 6.4 mit der zugeordneten dritten oder vierten Aufnahme 7.3 oder 7.4 möglich. Über den elastischen Randabschnitt 70 ist aber zumindest an der ersten Aufnahme 7.1 eine exakte Passung möglich und an den beiden verbleibenden Aufnahmen 7.3 und 7.4 können die jeweils auch hier vorgesehenen elastischen Randabschnitte 70 für einen weiteren Toleranzausgleich sorgen, so dass die Niete N2 und N3 nur ein geringes Maß an Verspannungen hervorrufen.

Wie aus den vergrößerten Detaildarstellungen der Figuren 2A und 2B ersichtlich ist, wird hier ein Randabschnitt 70 durch einen Niet N2, N3 auch stärker dem jeweiligen Anlagebereich 60 angenähert, so dass ein Abstand von dem jeweiligen Vorsprung 6.3, 6.4 jeweils zumindest etwas geringer ist als ein Abstand b des elastischen Randabschnitts 70 von dem Anlagebereich 60 derjenigen zweiten Aufnahme 7.2, durch die hindurch kein Befestigungselement geführt ist.

Die einzelnen als Niete ausgebildeten Befestigungselemente N1, N2 und N3 liegen im übrigen Platz sparend mit ihrem jeweiligen Nietkopf NK in einer dafür an der Rückseite des Trägers T jeweils vorgesehenen, napfförmigen Aussparung H1, H2 bzw. H3 an dem Träger T an.

Es sei ferner noch darauf hingewiesen, dass durch die keglige Anlagefläche in dem Anlagebereich 60 eines Vorsprungs 6.1 - 6.4 und an dem zugeordneten elastischen Randabschnitt 70 auch eine Lochleibung eines Niets N1, N2, N3 deutlich verringert ist.

Für die definierte Auflage der Führungsschiene FS an den Befestigungsabschnitten TA und TB des Trägers T sind ferner auf der ebenen, flächigen Oberseite 100 eines Befestigungsabschnitts TA, TB jeweils erhaben in Richtung auf die Führungsschiene FS vorstehende Auflagebereiche 5 vorgesehen. Die Führungsschiene FS liegt somit hier zum einen definiert auf den Rändern der Aufnahmen 7.1 bis 7.4 und zum anderen auf außerhalb der Aufnahme 7.1 - 7.4 vorgesehenen Auflagebereichen 5 des Trägers T auf. Dabei vermeiden die räumlich zu den einzelnen Aufnahmen 7.1 bis 7.4 beabstandeten (zusätzlichen) Auflagebereiche 5 (bzw. in den nachfolgend beschriebenen Varianten die Auflagebereiche 5.1 und 5.2) eine Verdrehung bzw. Torsion der längserstreckten Führungsschiene FS bei deren Fixierung an dem Träger T und damit die Einleitung von unerwünschten Querkräften in die Aufnahmen 7.1 - 7.4.

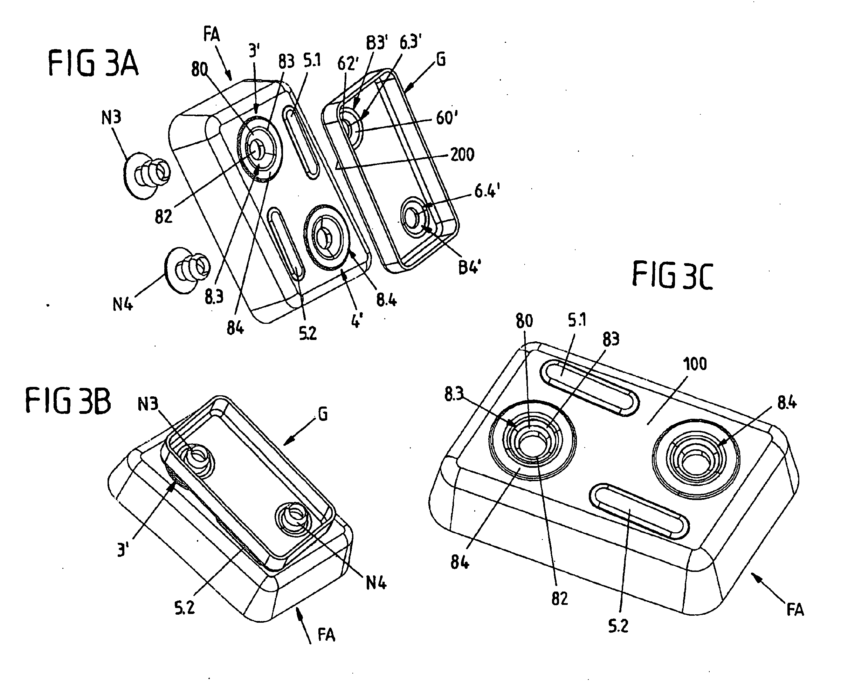

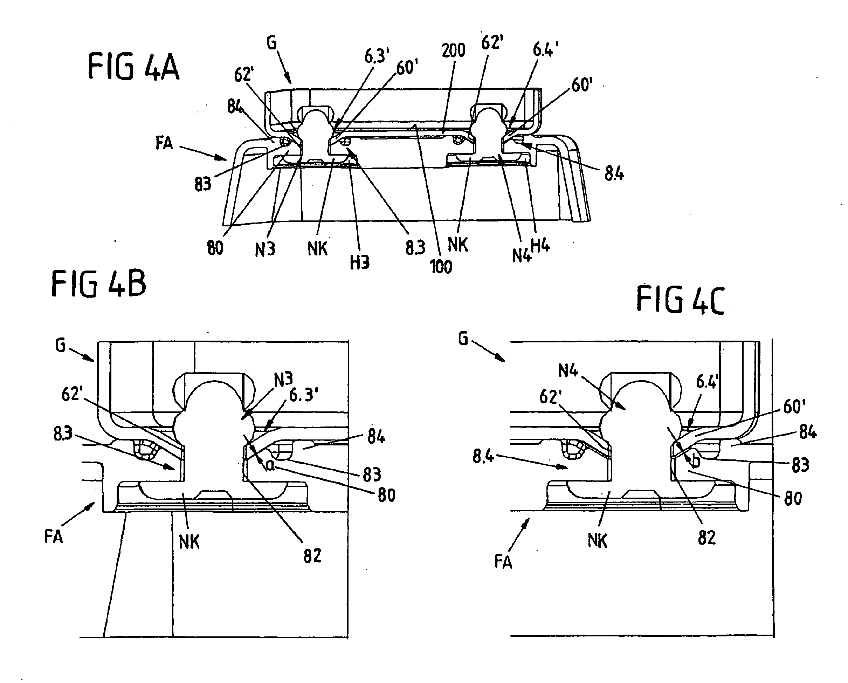

Derartige Auflagebereiche, auch hier in Form von längserstreckten erhabenen Bereichen an einer Oberseite 100, weist ebenfalls ein Trägerteil FA des Ausführungsbeispiels der Figuren 3A - 3C und 4A - 4C auf. An diesem Trägerteil FA wird ein weiteres (zweites) Bauteil, hier in Form eines schalenförmigen Gehäuseteils G, über zwei Befestigungselemente in Form von Nieten N3 und N4 fixiert. Das Trägerteil FA (bzw. der hier in den Figuren ersichtliche Abschnitt dieses Trägerteils FA) ist gleichfalls schalenförmig ausgebildet, wobei das Trägerteil FA und das Gehäuseteil G mit zueinander im Wesentlichen parallelen Seiten aneinander fixiert werden, so dass eine die Schalenform jeweils definierende umlaufende Wandung sich im Wesentlichen senkrecht von der mit dem anderen Bauteil verbundenen Seite weg erstreckt. Eine ebene Unterseite 200 des Gehäuseteils G liegt somit einer ebene Oberseite 100 des Trägerteils FA gegenüber.

Zur Fixierung der beiden Bauteile FA, G aneinander sind auch hier an dem einen Bauteil, dem Gehäuseteil G, Vorsprünge 6.3' und 6.4' an Befestigungsstellen B3', B4' vorgesehen. Diese Vorsprünge 6.3', 6.4' stehen an der Unterseite 200 des Gehäuseteils G in Richtung auf das Trägerteil FA vor und ragen bei bestimmungsgemäßer Anordnung der beiden Bauteile FA, G aneinander jeweils in eine dafür vorgesehene Aufnahme 8.3 bzw. 8.4 an Befestigungsstellen 3', 4' des Trägerbauteils FA hinein.

Die Aufnahmen 8.3 und 8.4 sind identisch zueinander und gegenüber dem Gehäuseteil G zurückgesetzt ausgebildet. Die Aufnahmen 8.3 und 8.4 liegen dabei (wie ein Paar von Aufnahme 7.1, 7.2 und 7.3, 7.4) räumlich versetzt zueinander. Ferner sind auch hier die Aufnahmen 8.3 und 8.4 kegelförmig ausgebildet, wobei im Bereich einer imaginären Kegelspitze mittig eine (erste) zwei gegenüberliegende Seiten des Trägerteils FA miteinander verbindende Befestigungsöffnung (Durchgangsbohrung) 82 vorgesehen ist.

Der jeweils zugeordnete Vorsprung 6.3', 6.4' des Gehäuseteils G bildet eine hierzu korrespondierende kegelige Gegenform aus, wobei hier gleichermaßen im Bereich einer imaginären Kegelspitze mittig eine durchgehende, zwei Seiten des Gehäuseteils G miteinander verbindende (zweite) Öffnung (Durchgangsbohrung) 62' vorgesehen ist. Bei bestimmungsgemäßer Anordnung der beiden Bauteile aneinander sind folglich die beiden Öffnungen 62', 82 miteinander zur Deckung gebracht, so dass durch diese hindurch ein Niet N3 oder N4 hindurchgeführt und festgezogen werden kann, um die beiden Bauteile FA, G aneinander zu fixieren.

Jeder der Vorsprünge 6.3' und 6.4' weist einen durch eine die Kegelform definierende, schräg verlaufende äußere Mantelfläche gebildeten Anlagebereich 60' auf. Dieser Anlagebereich 60' kann vorliegend zur Anlage an einem elastischen Randabschnitt der zugeordneten Aufnahme 8.3, 8.4 gebracht werden. Dabei sind ein Vorsprung 6.3', 6.4' und eine Aufnahme 8.3, 8.4 jeweils so aufeinander abgestimmt, dass der Vorsprung 6.3', 6.4' innerhalb der Aufnahme 8.3, 8.4 nicht anliegt, bevor ein Niet N3, N4 dort angebracht und festgezogen wird.

Ein Vorsprung 6.3', 6.4' erstreckt sich zwar bei der Anordnung des Gehäuseteils G an dem Trägerteil FA in die zugehörige Aufnahme 8.3 bzw. 8.4 hinein. Jedoch liegt das Gehäuseteil G (zunächst) ausschließlich mit seiner Unterseite 200 an dafür vorgesehenen, erhaben vorstehenden Auflagebereichen 5.1 und 5.2 an der Oberseite 100 des Trägerteils FA sowie an zwei schmalbandigen Auflageabschnitten 84 an, die jeweils den Rand einer Aufnahme 8.3 bzw. 8.4 kreisförmig umlaufen. Ein Auflageabschnitt 84 steht dabei in gleichem Maße von der Oberseite 100 des Trägerteils FA in Richtung des Gehäuseteils G vor wie ein Auflagebereich 5.1, 5.2.

Die Befestigungsöffnung 82 einer Aufnahme 8.3, 8.4 ist auch hier von einem elastisch verlagerbaren Randabschnitt 80 vollständig umlaufend berandet. Die Elastizität ist hierbei über einen ringförmig um die Öffnung 82 herum verlaufenden Schwächungsbereich 83 bereitgestellt. In diesem Schwächungsbereich 83 ist die Materialdicke der Aufnahme 8.3, 8.4 gegenüber dem an einer Seite des Schwächungsbereiches 83 radial angrenzenden Rand der Aufnahme 8.3, 8.4 (als auch gegenüber dem an der anderen Seite des Schwächungsbereiches 83 radial angrenzenden Randabschnitt 80) derart reduziert, dass der Randabschnitt 80 über den Schwächungsbereich 83 an dem Rand der Aufnahme 8.3, 8.4 elastisch angelenkt ist. Die Materialstärke des Randabschnitts 80 ist dabei ferner so gewählt, dass der durch Öffnung 82 hindurchgeführte Niet N3, N4 in Achsrichtung des Nietstifts ohne Weiteres abgestützt werden kann und somit nicht infolge der bei einer Verformung des Niets zur Fixierung der beiden Bauteile aneinander auftretenden Kräfte versagt.

Der in den Schnittansichten der Figuren 4B und 4C als Einkerbung erscheinende Schwächungsbereich 83 stellt vorliegend vor allem eine Verlagerbarkeit des jeweiligen Randabschnitts 80 (in Achsrichtung eines Nietstifts) auf den in die Aufnahme 8.3, 8.4 jeweils eingeführten Vorsprung 8.3' bzw. 8.4' zu bereit. Derart kann ein elastischer Randabschnitt 80 (flächig) gegen den Anlagebereich 60' des Vorsprungs 6.3' bzw. 6.4' mittels eines Befestigungselements in Form eines Niets N3, N4 gedrückt werden. Hierdurch kann insbesondere bei einem (ersten) Befestigungselement bzw. Niet N3 eine Arretierung des bereits formschlüssig in die (erste) Aufnahme 8.3 eingreifenden Vorsprungs 6.3' durch einen Kraftschluss erreicht werden, wenn das Gehäuseteil G und das Trägerteil FA aneinander fixiert werden. So kann der elastische Randabschnitt 80 beim Anziehen des Niets N3 für einen Ausgleich vorhandener Fertigungstoleranzen sorgen.

Durch die aufeinanderfolgende Anbringung der beiden Befestigungselemente bzw. Niete N3, N4 oder zumindest deren aufeinanderfolgendes Anziehen kann über den zuerst angebrachten oder angezogenen Niet N3 (vergleiche Figur 4B) eine Zentrierung der Mittel- bzw. Bohrungsachsen der beiden Öffnungen 62', 82 und eine vollflächige, reibschlüssige Anlage des elastischen Randabschnitts 80 an dem in die Aufnahme 8.3 eingeführten Vorsprung 6.3' erreicht werden. Dementsprechend wird eine exakte Passung des Vorsprungs 6.3' in der Aufnahme 8.3 zur Fixierung des Gehäuseteils G an dem Trägerteil FA erzielt, bei der der elastische Randabschnitt 80 unmittelbar an dem Vorsprung 6.3' anliegt oder zumindest einen minimalen Abstand a hierzu aufweist. An der verbliebenen zweiten Befestigungsstelle B4' des Gehäuseteils G und der Befestigungsstelle 4' des Trägerteils FA wird über den nachfolgend angezogenen Niet N4 der elastische Randabschnitt 80 der Aufnahme 8.4 ebenfalls dem eingeführten Vorsprung 6.4' bis auf einen kleinen Abstand b (idealerweise im Bereich von 0,2 bis 0,4 mm) angenähert. Die gewünschte Fixierung der beiden Bauteile in einer vorgegebenen Ausrichtung zueinander ist somit auch bei etwaigen toleranzbedingten Abweichungen in den Abmessungen der Aufnahmen 8.3, 8.4 und der Vorsprünge 6.3' und 6.4' unter Einbringung lediglich geringer Verspannungen in die beiden Bauteile FA, G im Bereich der Befestigungsstellen 3', B3' und 4', B4' gewährleistet.

Die Nietköpfe NK der Niete N3, N4 sind auch bei dem Trägerteil FA jeweils in einer Aussparung H3, H4 auf der dem Gehäuseteil G und der Oberseite 100 gegenüberliegenden Rückseite des Trägerteils FA aufgenommen. Die Aussparungen H3 und H4 liegen hier vorliegend an einer unteren ebene Fläche vor, die von den Seitenwandungen des Trägerteils FA eingefasst ist.

Es sei noch darauf hingewiesen, dass ein Randabschnitt 80 auch selbstverständlich in mehrere einzelne Segmente unterteilt ausgebildet werden kann. Die Randabschnittsegmente haben dabei dann folglich eine Kreissektor ähnliche Form und können über einen angezogenen Niet N3, N4 laschenartig in Richtung auf den jeweiligen Vorsprung 6.3', 6.4' verlagert werden.

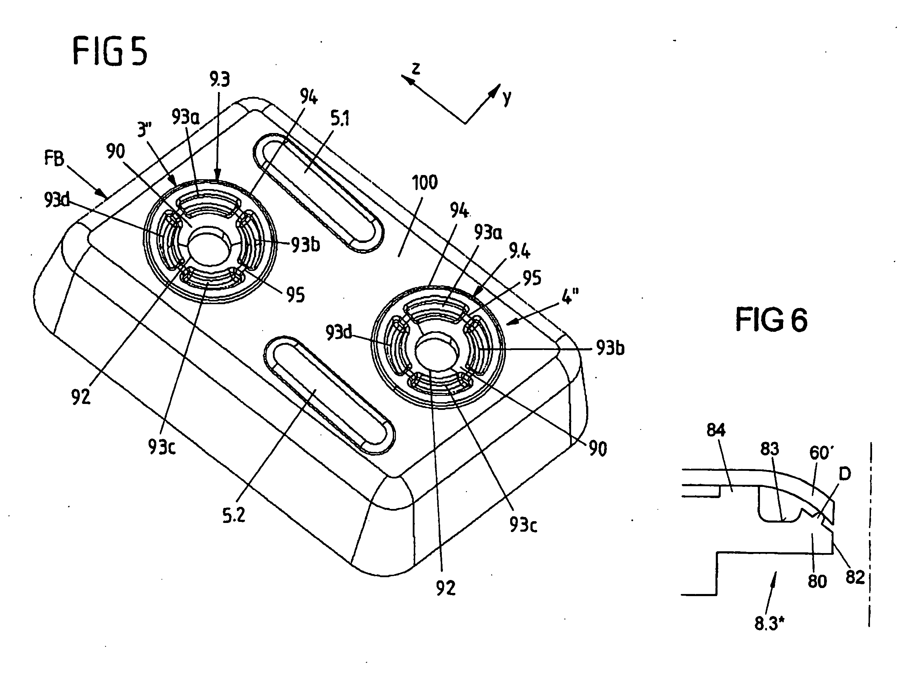

In der perspektivischen Ansicht der Figur 5 ist ein alternativ ausgestaltetes Trägerteil FB ersichtlich, das gegenüber dem Ausführungsbeispiel der Figuren 3A - 3C und 4A - 4C zwei veränderte Aufnahmen 9.3 und 9.5 aufweist, aber ansonsten identisch beschaffen ist.

Die auch hier kegelförmigen Aufnahmen 9.3 und 9.4 dienen gleichermaßen der Aufnahme von Vorsprüngen 6.3' und 6.4' eines Gehäuseteils G (in der Figur 5 nicht dargestellt). Die über die Aufnahmen 9.3 und 9.4 jeweils definierten Befestigungsstellen 3" und 4" an dem Trägerteil FB weisen in Übereinstimmung mit dem vorangegangenen Ausführungsbeispiel einen die jeweilige Aufnahme 9.3, 9.4 ringförmig umlaufend umgebenden Auflageabschnitt 94 auf. Auch ist in einer jeder der kegeligen Aufnahmen 9.3 und 9.4 eine (erste) durchgehende Befestigungsöffnung 92 vorgesehen, die von einem elastisch verlagerbaren (und gegebenenfalls in einzelne Segmente unterteilten) Randabschnitt 90 umrandet ist.

Die Verlagerbarkeit des Randabschnitts 90 gegenüber einem Rand der jeweiligen Aufnahme 9.3 bzw. 9.4 ist hierbei im Unterschied zu dem Ausführungsbeispiel der Figuren 3A - 3C und 4A - 4C nicht durch einen ringförmig die Befestigungsöffnung 92 umlaufenden Schwächungsbereich gebildet, sondern durch mehrere (hier vier) die Befestigungsöffnung 92 jeweils kreissegmentartig umlaufende und voneinander räumlich beabstandete Schwächungsbereiche 93a, 93b, 93c und 93d bereitgestellt.

Die einzelnen Schwächungsbereiche 93a - 93d erstrecken sich damit zwar auch entlang einer Kreisbahn um die Befestigungsöffnung 92. Sie sind jedoch als einzelne zueinander beabstandete Segmente ausgebildet, die gegenüber dem Rand der Aufnahme 9.3, 9.4 und gegenüber dem angrenzenden Randabschnitt 90 eine geringere Wandstärke bzw. Materialdicke aufweisen. Zwischen zwei Schwächungsbereichen 93a, 93b; 93g, 93c; 93c, 93d oder 93d, 93a verläuft somit jeweils ein Verbindungssteg 95. Über insgesamt Verbindungsstege 95 sind somit vorliegende die Schwächungsbereiche 93a bis 93d paarweise miteinander verbunden.

Diese Verbindungsstege 95 verlaufen vorliegend entlang von den (zueinander senkrechten und sich radial von der Öffnung 92 nach außen erstreckenden) Hauptbelastungsrichtungen. Sie dienen dabei als Verstärkungen zur Kraftübertragung. So würden die Verbindungsstege 95 bei einer Anordnung der in der Figur 5 ersichtlichen Aufnahmen 9.4 und 9.5 an einem Träger T der Figuren 1A - 1C im Wesentlichen entlang der Längserstreckungsrichtung (in Z - und -Z - Richtung) der Führungsschiene FS und quer hierzu (in Y - und -Y - Richtung) verlaufen. Entlang der beiden dadurch definierten Hauptbelastungsachsen treten bei bestimmungsgemäßen Einbau des Trägers T und der Führungsschiene FS in eine Kraftfahrzeugstruktur und bei bestimmungsgemäßen Gebrauch des zugehörigen Fensterhebers die größten Kräfte auf, die in den Träger T sicher eingeleitet werden sollen.

Derartige Verbindungsstege 95, als lokale Materialverstärkungen, können selbstverständlich innerhalb einer alternativ ausgebildeten Aufnahme vorgesehen sein, die nicht vier kreissegmentartige Schwächungsbereiche 93a bis 93d aufweist.

Die im Zusammenhang mit dem vorangegangenen Ausführungsbeispiel erläuterte Funktionalität des verlagerbaren Randabschnitts 90 bleibt hierüber erhalten. Es wird lediglich eine größere Stabilität der Anbindung des Randabschnitts 90 an den Rand einer Aufnahme 9.3, 9.4 erreicht. Auch in diesem Ausführungsbeispiel wird somit erreicht, dass sich die beiden Bauteile FB und G (wie auch in den vorangegangenen Ausführungsbeispielen die beiden Bauteile T und FS bzw. FA und G) im Bereich des flexiblen Randabschnitts 90 (70 bzw. 80) während des Befestigungsprozesses selbsttätig zueinander ausrichten und eine bestimmungsgemäße tragfähige Verbindung bilden können, wobei mindestens ein vorstehender Abschnitt 6.3' (6.1) durch den verlagerten und gegen diesen vorstehenden Abschnitt 6.3' (6.1) gedrückten Randabschnitt 90 (70 bzw. 80) in der Aufnahme 9.3 (8.3 bzw. 7.1) arretiert ist.

In der Figur 6 ist in einer Detailansicht eine mögliche Weiterbildung für eine Aufnahme 8.3* veranschaulicht, die im Wesentlichen mit einer Aufnahme 8.3, 8.4 oder 9.3, 9.4 der vorangegangenen Ausführungsbeispiele übereinstimmt. Für übereinstimmende Elemente sind demgemäß identische Bezugszeichen verwendet.

Bei der Aufnahme 8.3* ist an einem elastischen Randabschnitt 80 eine (gegebenenfalls ringförmig um die Befestigungsöffnung 82 umlaufende) Deformationsrippe D vorgesehen.

Diese Deformationsrippe D weist eine gegenüber der Materialdicke des Randabschnitts 80 um ein Vielfaches kleinere Materialstärke auf und steht in Richtung auf den einzuführenden Vorsprung (also in Füge- bzw. Verbindungsrichtung) mit seinem Anlagebereich 60' erhaben an dem elastischen Randabschnitt 80 hervor.

Die Deformationsrippe D ist an dem Randabschnitt 80 angeformt und verringert bei in die Aufnahme 8.3* eingeführtem Vorsprung lokal den sich (zunächst) einstellenden Abstand zwischen dem Vorsprung und dem Randabschnitt 80. Sie dient somit einer Überbrückung von gegebenenfalls vorliegenden, zu großen Toleranzen, so dass der in die Aufnahme 8.3* eingeführte Vorsprung (stets) zumindest lokal an der Deformationsrippe D anliegt. Übermäßige Befestigungskräfte können durch die Verformung der Deformationsrippe D gezielt abgebaut werden, so dass unerwünscht große Verformungen oder Beschädigungen der tragenden Bereiche des Kunststoff-Verbindungsbereichs des ersten Bauteils (also des Trägers T oder des Trägerteils FA oder FB) sicher vermieden werden.

Über die Deformationsrippe D kann auch eine Dichtung zwischen den beiden aneinander zu fixierenden Bauteilen bereitgestellt sein. So kann die Deformationsrippe D derart ausgebildet sein, dass sie gezielt versagt, wenn der elastische Randabschnitt 80 durch das angezogene Befestigungselement, zum Beispiel einen Niet, mit ausreichender Kraft gegen den Anlagebereich 60' des in die Aufnahme 8.3* eingeführten Vorsprungs gedrückt wird. Die zusammengequetschte Dichtrippe D kann dementsprechend eine Barriere für Feuchtigkeit bilden, über die verhindert wird, dass zum Beispiel Feuchtigkeit von einer Seite des Trägerteils FA über die Befestigungsöffnung 82 zwischen die beiden Bauteile FA, G gelangt oder umgekehrt.

Die Deformationsrippe D kann insbesondere an den elastischen Randabschnitt 80 angespritzt sein.

Alternativ kann selbstverständlich auch anstelle einer versagenden Deformationsrippe D ein komprimierbares Dichtelement, zum Beispiel aus Kautschuk, an dem Randabschnitt 80 vorgesehen sein.

Die in den hier wiedergegebenen Figuren ersichtlichen Paare von Aufnahmen und Vorsprüngen können selbstverständlich beliebig miteinander kombiniert werden. Gleichermaßen ist es nicht zwingend, dass stets nur an einem Bauteil mehrere Aufnahmen und an dem anderen Bauteil die dazu korrespondierenden Vorsprünge vorgesehen sind. So kann insbesondere vorgesehen sein, dass ein (erstes oder zweites) Bauteil jeweils einen Vorsprung und eine Aufnahme aufweist.

Ferner können die in den Figuren 3A - 3C und 4A - 4C sowie in den Figuren 5 und 6 ersichtlichen Kombinationen von Aufnahmen 8.3, 8.3*, 8.4, 9.3 und 9.4 und Vorsprüngen 6.3', 6.4' selbstverständlich auch im Zusammenhang mit Komponenten einer Fensterheberbaugruppe entsprechend den Figuren 1A - 1C und 2A - 2B verwendet werden und umgekehrt.

### Bezugszeichenliste

- 1: Befestigungsstelle (mit Durchgangsöffnung)
- 100: (Ober-) Seite
- 2: Befestigungsstelle (mit Sacklochöffnung)
- 200: (Unter-) Seite
- 3, 3', 3": Befestigungsstelle (mit Durchgangsöffnung)
- 4. 4', 4": Befestigungsstelle (mit Durchgangsöffnung)
- 5: Auflagebereich
- 5.1, 5.2: Auflagebereich
- 6.1 - 6.4: Vorsprung
- 6.3', 6.4': Vorsprung
- 60, 60': Anlagebereich
- 61: Einführbereich
- 62, 62': (zweite) Öffnung
- 7.1 - 7.4: Aufnahme
- 70: (elastischer) Randabschnitt
- 71, 71': Basis
- 72: (erste) Befestigungsöffnung
- 8.3, 8.3*: Aufnahme
- 8.4: Aufnahme
- 80: (elastischer) Abschnitt
- 82: (erste) Befestigungsöffnung
- 83: Schwächungsbereich
- 84: Auflageabschnitt
- 9.3, 9.4: Aufnahme
- 90: (elastischer) Abschnitt
- 92: (erste) Befestigungsöffnung
- 93a, 93b, 93c, 93d: Schwächungsbereich
- 94: Auflageabschnitt
- 95: Verbindungssteg
- a, b: Abstand
- B1 - B4: Befestigungsstelle
- B3', B4': Befestigungsstelle
- D: Deformationsteil
- FA, FB: Trägerteil
- FS: Führungsschiene
- G: Gehäuseteil
- H1, H2, H3, H4: Aussparung
- N1, N2, N3, N4: Niet (Befestigungselement)
- NK: Nietkopf
- T: Träger
- TA, TB: Befestigungsabschnitt
- VR: Verstärkungsrippe

## Patentansprüche

1. Baugruppe für ein Kraftfahrzeug, mit wenigstens einem ersten Bauteil und einem zweiten Bauteil, die über wenigstens ein Befestigungselement aneinander fixiert sind, wobei das erste Bauteil eine erste Öffnung und das zweite Bauteil eine zweite Öffnung aufweisen, in die das Befestigungselement zur Fixierung der beiden Bauteile aneinander jeweils eingreift, und die erste Öffnung von einem flexibel verlagerbaren Randabschnitt des ersten Bauteils berandet ist, der von dem Befestigungselement gegenüber einem unbelasteten Ursprungszustand, in dem das erste Bauteil nicht an dem zweiten Bauteil fixiert ist, verlagert ist, wobei die erste Öffnung mit dem Randabschnitt innerhalb einer gegenüber dem zweiten Bauteil zurückgesetzten Aufnahme des ersten Bauteils ausgebildet ist, **dadurch gekennzeichnet, dass** sich in die Aufnahme (7.1 - 7.4; 8.3, 8.3*, 8.4; 9.3, 9.4) hinein ein von dem zweiten Bauteil (FS; G) in Richtung des ersten Bauteils (T; FA; FB) vorstehender Abschnitt (6.1 - 6.4; 6.3', 6.4') des zweiten Bauteils (FS; G) erstreckt, der die zweite Öffnung (62; 62') des zweiten Bauteils (FS; G) berandet.

2. Baugruppe nach Anspruch 1, **dadurch gekennzeichnet, dass** der Randabschnitt (70; 80; 90) des ersten Bauteils (T; FA; FB), der die erste Öffnung (72; 82; 92) berandet, elastisch verlagerbar ausgebildet ist.

3. Baugruppe nach Anspruch 1 oder 2, **dadurch gekennzeichnet, dass** der vorstehende Abschnitt (6.1 - 6.4; 6.3', 6.4') des zweiten Bauteils (FS; G) an dem Randabschnitt (70; 80; 90) des ersten Bauteils (T; FA; FB) anliegt.

4. Baugruppe nach einem der Ansprüche 1 bis 3, **dadurch gekennzeichnet, dass** das zweite Bauteil (FS; G) außerhalb der zurückgesetzten Aufnahme (7.1 - 7.4; 8.3, 8.3*, 8.4; 9.3, 9.4) des ersten Bauteils (FA; FB) an dafür vorgesehenen Auflagebereichen (5; 5.1, 5.2, 84, 94) an dem ersten Bauteil (T; FA; FB) aufliegt.

5. Baugruppe nach einem der vorhergehenden Ansprüche, **dadurch gekennzeichnet, dass** die Aufnahme (7.1 - 7.4; 8.3, 8.3*, 8.4; 9.3, 9.4) eine Wandung aufweist, die zumindest teilweise schräg in Richtung auf das zweite Bauteil (FS; G) zu verläuft.

6. Baugruppe nach Anspruch 5, **dadurch gekennzeichnet, dass** die Aufnahme (7.1 - 7.4; 8.3, 8.3*, 8.4; 9.3, 9.4) kegelförmig, insbesondere trichterförmig ausgebildet ist.

7. Baugruppe nach einem der vorhergehenden Ansprüche, **dadurch gekennzeichnet, dass** die innerhalb der Aufnahme (7.1 - 7.4; 8.3, 8.3*, 8.4; 9.3, 9.4) Verbindungsstege (95) ausgebildet sind, die als Verstärkungen zur Übertragung von Kräften von dem einen Bauteil (FS, G; T; FA; FB) in das andere Bauteil (T, FA, FB; FS, G) vorgesehen sind und sich im Wesentlichen entlang mindestens einer Hauptbelastungsrichtung (Y, Z) erstrecken.

8. Baugruppe nach einem der vorhergehenden Ansprüche, **dadurch gekennzeichnet, dass** der Randabschnitt (70; 80; 90) des ersten Bauteils (T; FA; FB) über einen Schwächungsbereich (83; 93a, 93b, 93c, 93d) derart mit einem Rand der Aufnahme (8.3, 8.3*, 8.4; 9.3, 9.4) verbunden ist, dass der Randabschnitt (70; 80; 90) gegenüber dem Rand der Aufnahme (8.3, 8.3*, 8.4; 9.3, 9.4) flexibel oder elastisch verlagerbar ist.

9. Baugruppe nach Anspruch 8, **dadurch gekennzeichnet, dass** der Schwächungsbereich (83; 93a, 93b, 93c, 93d) eine geringere Materialdicke aufweist als der daran angrenzende Randabschnitt (80; 90) und als der daran angrenzende Rand der Aufnahme (8.3, 8.3*, 8.4; 9.3, 9.4).

10. Baugruppe nach Anspruch 8 oder 9, **dadurch gekennzeichnet, dass** sich der Schwächungsbereich (83; 93a, 93b, 93c, 93d) zumindest teilweise entlang einer zu der ersten Öffnung (82; 92) im Wesentlichen konzentrisch verlaufenden Bahn, insbesondere entlang einer Kreisbahn erstreckt.

11. Baugruppe nach Anspruch 10, **dadurch gekennzeichnet, dass** sich der Schwächungsbereich (83) ringförmig um die erste Öffnung (82) erstreckt oder sich der Schwächungsbereich (93a, 93b, 93c, 93d) kreissegmentartig um die erste Öffnung (92) erstreckt.

12. Baugruppe nach einem der vorhergehenden Ansprüche, **dadurch gekennzeichnet, dass** mindestens eine weitere, gegenüber einem Bauteil (T, FA, FB; FS, G) zurückgesetzte Aufnahme (7.1 - 7.4; 8.3, 8.3*, 8.4; 9.3, 9.4) mit einem wenigstens flexibel verlagerbaren Randabschnitt (70; 80; 90) an einem der beiden Bauteile (T, FS; FA, G; FB, G) vorgesehen ist, in die hinein sich weiterer vorstehender Abschnitt (6.1 - 6.4; 6.3', 6.4') des anderen Bauteils (FS, G; T, FA, FB) erstreckt.

13. Baugruppe nach einem der vorhergehenden Ansprüche, **dadurch gekennzeichnet, dass** mindestens eine Deformationsrippe (D) an dem wenigstens einen flexiblen Randabschnitt (70; 80; 90) vorgesehen ist, die in Richtung auf den vorstehenden Abschnitt (6.1 - 6.4; 6.3', 6.4') hervorsteht und so ausgebildet ist, dass sie gezielt versagt, wenn der elastische Randabschnitt (70; 80; 90) und der vorstehende Abschnitt (6.1 - 6.4; 6.3', 6.4') mit einer einen Schwellwert übersteigenden Kraft aneinander gedrückt werden.

14. Baugruppe nach einem der vorhergehenden Ansprüche, **dadurch gekennzeichnet, dass** eines der beiden Bauteile (T, FS; FA, G; FB, G) aus Metall und das andere Bauteil (FS, T; G, FA; G, FB) aus einem Kunststoffmaterial hergestellt ist und/oder die beiden Bauteile (T, FS; FA, G; FB, G) Komponenten einer Fensterheberbaugruppe für ein Kraftfahrzeug sind.

15. Baugruppe nach einem der vorhergehenden Ansprüche, **dadurch gekennzeichnet, dass** der wenigstens eine flexibel verlagerbare Randabschnitt (70, 80, 90) zum Ausgleich von Fertigungstoleranzen ausgebildet und vorgesehen sind, so dass sich die beiden Bauteile (T, FS; FA, G; FB, G) im Bereich des flexiblen Randabschnitts (70, 80, 90) während des Befestigungsprozesses selbsttätig zueinander ausrichten und eine bestimmungsgemäße tragfähige Verbindung bilden können, wobei der vorstehende Abschnitt (6.1 - 6.4; 6.3', 6.4') durch den verlagerten und gegen den vorstehenden Abschnitt (6.1 - 6.4; 6.3', 6.4') gedrückten Randabschnitt (70, 80, 90) in der Aufnahme arretiert ist.

## Claims

1. Assembly for a motor vehicle comprising at least a first component and a second component which are fixed together by means of at least one fastening element, wherein the first component comprises a first opening and the second component comprises a second opening into which the fastening element in each case engages for fixating the two components together, and the first opening is bordered by a flexible shiftable edge section of the first component, which is shifted from the fastening element in respect to an unloaded original status in which the first component is not fixed to the second component, wherein the first opening with the edge section is formed within a receptacle of the first component the receptacle set back in respect to the second component, **characterized in that** a section (6.1-6.4; 6.3', 6.4') of the second component (FS, G) protruding from the second component (FS, G) in direction to the first component (T; FA; FB) extends into the receptacle (7.1-7.4; 8.3, 8.3*, 8.4; 9.3, 9.4), wherein said section borders the second opening (62; 62') of the second component (FS; G).

2. Assembly according to claim 1, **characterized in that** the edge section (70; 80; 90) of the first component (T; FA; FB), which borders the first opening (72; 82; 92), is formed elastically shiftable.

3. Assembly according to claim 1 or 2, **characterized in that** the protruding section (6.1-6.4; 6.3', 6.4') of the second component (FS; G) rests against the edge section (70; 80; 90) of the first component (T; FA; FB).

4. Assembly according to one of the claims 1 to 3, **characterized in that** the second component (FS; G) rests outside of the set-back receptacle (7.1-7.4; 8.3, 8.3*, 8.4; 9.3, 9.4) of the first component (FA; FB) on support areas (5; 5.1, 5.2, 84, 94) provided therefore on the first component (T; FA; FB).

5. Assembly according to one of the proceeding claims, **characterized in that** the receptacle (7.1-7.4; 8.3, 8.3*, 8.4; 9.3, 9.4) comprises a wall, which continues at least partially inclined in direction towards the second component (FS; G).

6. Assembly according to claim 5, **characterized in that** the receptacle (7.1-7.4; 8.3, 8.3*, 8.4; 9.3, 9.4) is formed cone-shaped, in particular funnel-shaped.

7. Assembly according to one of the preceding claims, **characterized in that** connecting bars (95) are formed within the receptacle (7.1-7.4; 8.3, 8.3*, 8.4; 9.3, 9.4), which are provided as reinforcements for transfer of forces from the one component (FS, G; T; FA; FB) into the other component (T, FA, FB; FS, G) and which extend essentially along at least one main loading direction (Y, Z).

8. Assembly according to one of the preceding claims, **characterized in that** the edge section (70; 80; 90) of the first component (T; FA; FB) is connected via a weakening area (83; 93a, 93b, 93c, 93d) to an edge of the receptacle (8.3, 8.3*, 8.4; 9.3, 9.4) such that the edge section (70; 80; 90) is flexible or elastically shiftable in respect to the edge of the receptacle (8.3, 8.3*, 8.4; 9.3, 9.4).

9. Assembly according to claim 8, **characterized in that** the weakening area (83; 93a, 93b, 93c, 93d) has a smaller material thickness than the adjacent edge section (80, 90) and the edge of the receptacle (8.3, 8.3*. 8.4; 9.3, 9.4) adjacent thereto.

10. Assembly according to claim 8 or 9, **characterized in that** the weakening area (83; 93a, 93b, 93c, 93d) extends at least partially along a path which continues essentially concentrically to the first opening (82; 92), in particular along a circular path.

11. Assembly according to claim 10, **characterized in that** the weakening area (83) extends annular around the first opening (82) or the weakening area (93a, 93b, 93c, 93d) extends circular segment-like around the first opening (92).

12. Assembly according to one of the preceding claims, **characterized in that** at least one further receptacle (7.1-7.4; 8.3, 8.3*, 8.4; 9.3, 9.4) set back in respect to a component (T,FA, FB; FS, G) is provided with at least one flexible shiftable edge section (70; 80; 90) at one of the two components (T, FS; FA, G; FB, G), into which a further protruding section (6.1-6.4; 6.3',6.4') of the other component (FS, G; T, FA, FB) extends.

13. Assembly according to one of the preceding claims, **characterized in that** at least one deformation rib (D) is provided at the at least one flexible edge section (70; 80; 90), which projects in direction to the protruding section (6.1-6.4; 6.3', 6.4') and which is formed such that it fails in a targeted manner if the elastic edge section (70; 80; 90) and the protruding section (6.1-6.4; 6.3', 6,4') are pressed against each other by a force exceeding a threshold value.

14. Assembly according to one of the preceding claims, **characterized in that** one of the two components (T, FS; FA, G; FB, G) is made of metal and the other component (FS, T; G, FA; G, FB) is made of a plastic material and/or the two components (T, FS; FA, G; FB, G) are components of a window lifter assembly for a motor vehicle.

15. Assembly according to one of the preceding claims, **characterized in that** the at least one flexible shiftable edge section (70, 80, 90) is formed and provided for compensation of manufacturing tolerances such that the two components (T, FS; FA, G; FB, G) automatically align to one another in the area of the flexible edge section (70, 80, 90) during the fastening process and can form a solid connection as intended, wherein the protruding section (6.1-6.4; 6.3', 6.4') is locked in the receptacle by the edge section (70, 80, 90) which is shifted and pushed against the protruding section (6.1-6.4; 6.3', 6.4').

## Revendications

1. Assemblage pour un véhicule automobile avec au moins un premier composant et un second composant qui sont fixés l'un sur l'autre par au moins un élément de fixation, le premier composant présentant une première ouverture et le second composant présentant une seconde ouverture, dans lesquelles l'élément de fixation s'engage respectivement pour la fixation des deux composants l'un à l'autre, et la première ouverture étant encadrée par une portion de bord déplaçable de manière flexible du premier composant qui est déplacée par l'élément de fixation par rapport à un état d'origine non sollicité, dans lequel le premier composant n'est pas fixé sur le second composant, la première ouverture étant réalisée avec la portion de bord dans un logement, reculé par rapport au second composant, du premier composant, **caractérisé en ce qu'**une portion (6.1 - 6.4 ; 6.3', 6.4'), dépassant du second composant (FS ; G) en direction du premier composant (T ; FA ; FB), du second composant (FS ; G) s'étend dans le logement (7.1 - 7.4 ; 8.3, 8.3*, 8.4 ; 9.3, 9.4), laquelle portion encadre la seconde ouverture (62 ; 62') du second composant (FS ; G).

2. Assemblage selon la revendication 1, **caractérisé en ce que** la portion de bord (70 ; 80 ; 90) du premier composant (T ; FA ; FB) qui encadre la première ouverture (72 ; 82 ; 92), est réalisée déplaçable élastiquement.

3. Assemblage selon la revendication 1 ou 2, **caractérisé en ce que** la portion en saillie (6.1 - 6.4 ; 6.3', 6.4') du second composant (FS ; G) repose sur la portion de bord (70 ; 80 ; 90) du premier composant (T ; FA ; FB).

4. Assemblage selon l'une quelconque des revendications 1 à 3, **caractérisé en ce que** le second composant (FS ; G) repose en dehors du logement reculé (7.1 - 7.4 ; 8.3 ; 8.3*, 8.4 ; 9.3, 9.4) du premier composant (FA, FB) sur des zones d'appui (5 ; 5.1, 5.2, 84, 94) prévues à cet effet sur le premier composant (T ; FA ; FB).

5. Assemblage selon l'une quelconque des revendications précédentes, **caractérisé en ce que** le logement (7.1 - 7.4 ; 8.3, 8.3*, 8.4 ; 9.3, 9.4) présente une paroi qui s'étend au moins en partie en biais en direction du second composant (FS ; G).

6. Assemblage selon la revendication 5, **caractérisé en ce que** le logement (7.1 - 7.4 ; 8.3, 8.3*, 8.4 ; 9.3, 9.4) est réalisé en forme de cône, en particulier d'entonnoir.

7. Assemblage selon l'une quelconque des revendications précédentes, **caractérisé en ce que** des nervures de liaison (95) sont réalisées dans le logement (7.1 - 7.4 ; 8.3, 8.3*, 8.4 ; 9.3, 9.4), lesquelles sont prévues comme renforcements pour la transmission de forces d'un composant (FS, G ; T ; FA ; FB) à l'autre composant (T, FA, FB ; FS, G) et s'étendent sensiblement le long au moins d'une direction de sollicitation principale (Y, Z).

8. Assemblage selon l'une quelconque des revendications précédentes, **caractérisé en ce que** la portion de bord (70 ; 80 ; 90) du premier composant (T ; FA ; FB) est reliée par une zone d'affaiblissement (83 ; 93a, 93b, 93c, 93d) avec un bord du logement (8.3, 8.3*, 8.4 ; 9.3, 9.4) de telle manière que la portion de bord (70 ; 80 ; 90) soit déplaçable de manière flexible ou élastique par rapport au bord du logement (8.3, 8.3*, 8.4 ; 9.3, 9.4).

9. Assemblage selon la revendication 8, **caractérisé en ce que** la zone d'affaiblissement (83 ; 93a, 93b, 93c, 93d) présente une plus faible épaisseur de matériau que la portion de bord (80 ; 90) contiguë à celle-ci et que le bord contigu à celle-ci du logement (8.3, 8.3*, 8.4 ; 9.3, 9.4).

10. Assemblage selon la revendication 8 ou 9, **caractérisé en ce que** la zone d'affaiblissement (83 ; 93a, 93b, 93c, 93d) s'étend au moins en partie le long d'une bande s'étendant sensiblement concentriquement à la première ouverture (82 ; 92), en particulier le long d'une bande circulaire.

11. Assemblage selon la revendication 10, **caractérisé en ce que** la zone d'affaiblissement (83) s'étend en forme d'anneau autour de la première ouverture (82) ou la zone d'affaiblissement (93a, 93b, 93c, 93d) s'étend en forme de segment de cercle autour de la première ouverture (92).

12. Assemblage selon l'une quelconque des revendications précédentes, **caractérisé en ce qu'**au moins un autre logement (7.1 - 7.4 ; 8.3, 8.3*, 8.4 ; 9.3, 9.4) reculé par rapport à un composant (T, FA, FB ; FS, G) est prévu avec une portion de bord (70 ; 80 ; 90) déplaçable au moins de manière flexible sur l'un des deux composants (T, FS ; FA, G ; FB, G), dans lequel une autre portion en saillie (6.1 - 6.4 ; 6.3', 6.4') de l'autre composant (FS, G ; T, FA, FB) s'étend.

13. Assemblage selon l'une quelconque des revendications précédentes, **caractérisé en ce qu'**au moins une nervure de déformation (D) est prévue sur l'au moins une portion de bord (70 ; 80 ; 90) flexible qui dépasse en direction de la portion en saillie (6.1 - 6.4 ; 6.3', 6.4') et est réalisée de sorte qu'elle s'effondre de manière ciblée lorsque la portion de bord (70 ; 80 ; 90) élastique et la portion en saillie (6.1 - 6.4 ; 6.3', 6.4') sont pressées l'une contre l'autre avec une force dépassant une valeur seuil.

14. Assemblage selon l'une quelconque des revendications précédentes, **caractérisé en ce que** l'un des deux composants (T, FS ; FA, G ; FB, G) est fabriqué en métal et l'autre composant (FS, T ; G, FA ; G, FB) est fabriqué en un matériau synthétique et/ou les deux composants (T, FS ; FA, G ; FB, G) sont des composants d'un assemblage de lève-vitre pour un véhicule automobile.

15. Assemblage selon l'une quelconque des revendications précédentes, **caractérisé en ce que** l'au moins une portion de bord (70, 80, 90) déplaçable de manière flexible est réalisée et prévue pour la compensation de tolérances de fabrication de sorte que les deux composants (T, FS ; FA, G ; FB, G) puissent s'orienter automatiquement l'un par rapport à l'autre dans la zone de la portion de bord (70, 80, 90) flexible pendant le processus de fixation et former une liaison portante conforme à la destination, la portion en saillie (6.1 - 6.4 ; 6.3', 6.4') étant arrêtée par la portion de bord (70, 80, 90) déplacée et pressée contre la portion en saillie (6.1 - 6.4 ; 6.3', 6.4') dans le logement.
